# EUROPEAN PATENT SPECIFICATION

(11) **EP 2 583 901 B1**
(45) Date of publication and mention of the grant of the patent: **23.10.2013**
(21) Application number: 12189182.4
(22) Date of filing: 19.10.2012
(51) Int. Cl.: B65B 9/06, B65B 25/08, B29C 65/76, B65D 33/18, B65D 75/58

(54) **Method and apparatus for manufacturing a re-closable package for sliced food products and a re-closable package**
Verfahren und Vorrichtung zur Herstellung einer wiederverschließbaren Verpackung für in Scheiben geschnittene Lebensmittelprodukte und wiederverschließbare Verpackung
Procédé et dispositif de fabrication d'un emballage refermable pour produits alimentaires en tranches et emballage refermable

(30) Priority: 20.10.2011 NL 2007635
(43) Date of publication of application: 24.04.2013
(73) Proprietor: Stegeman C.V., 7418 EW Deventer (NL)
(72) Inventor: Vermaas, Theodoor Jeroen, 7418 EW Deventer (NL)
(74) Representative: Jansen, Cornelis Marinus

(56) References cited:
- EP-A1- 0 655 326
- DE-A1-102005 013 585
- DE-U1- 9 005 375
- FR-A1- 2 799 734
- US-A- 3 339 337
- US-A- 5 557 882

## Description

### Field of the invention

The invention relates to a method for manufacturing a re-closable package for sliced food products, and a re-closable package preferably manufactured with such method.

### Background of the invention

A method for manufacturing a re-closable package for sliced food products is known from practice. Such a re-closable package may be used for containing a sliced food product, such as slices of cheese or slices of sausage and may be hermetically sealed until said package is opened for access to the products provided inside said package. To re-close the package a re-closable connecting element provided on the package may be used to maintain the sliced food products within the package until access thereto is again desired. Such a method for instance comprises different folding and sealing steps forming said package from foil material. For instance, the package may be manufactured from one or two sheets of foil material that are folded and sealed together, or sealed together, respectively, the package further comprising a re-closable element to re-close the package once at least one of the seals has been opened. After forming the package, an amount of sliced food products may be inserted in the inner space via an inserting opening that is available before closing the package by sealing said last open edge thereof. In use, the re-closable package may be opened initially by breaking the sealing seam that closes the inserting opening of the package. Re-closing of the package may be obtained by means of a re-closable strip provided, for instance an adhesive layer with a backing. After breaking the sealing seam and re-opening the inserting opening, the backing can be removed from the adhesive layer, which then can receive part of the packaging material to re-close the package.

A drawback of the above described manufacturing method for obtaining a re-closable package is that said method comprises multiple subsequent steps that are performed on different manufacturing apparatuses. Consequently, the process is relatively cost and time ineffective.

It is therefore an object of the invention to provide an improved manufacturing method for manufacturing a re-closable package for sliced food products. More in particular, it is an object of the invention to provide a method for manufacturing a re-closable package for sliced food products with a limited amount of manufacturing steps and resulting in a high quality package. A pertinent prior art is disclosed by the document DE 102005 013 585 A1.

### Summary of the invention

Thereto, according to a first aspect of the invention, a method for manufacturing a re-closable package for sliced food products, such a sliced meat or sliced cheese, is provided, wherein the method comprises the steps of:
- folding a web of film material web along a substantially longitudinal first folding line resulting in two opposing film material layers, wherein a first longitudinal edge of a first layer is positioned at a short distance of a second longitudinal edge of a second layer;
- providing a re-closable strip on one of the first and second layers extending substantially parallel to the longitudinal edges, wherein the re-closable strip comprises a substantially longitudinal adhesive layer covered with a backing layer at a side facing away from the film material layer to which the adhesive layer is attached;
- interconnecting the opposing film material layers adjacent the longitudinal edges to create a package inner space between the first folding line and a substantially longitudinal connection line;
- folding both film material layers along a substantially longitudinal second folding line, said second folding line provided adjacent and substantially parallel to the connection line such that one of the film material layers abuts the re-closable strip, wherein the film material layer that abuts the re-closable strip after folding the film material layers along the second folding line is removably connected to adhesive material from the adhesive layer that exits from between the backing layer and the film material layer to which the adhesive layer is attached;
- closing the inner space at transversal connection lines that extend substantially perpendicular to the first and second folding lines.

With such a method, folding the film material along the respective folding lines is provided in a single continuous operating step and movement along the manufacturing apparatus. Consequently, positioning of the second folding line can be obtained very accurately and stress in the web material remains similar during the folding steps thereby resulting in a desired quality of the package. Furthermore, all connection lines are formed by sealing only two layers of film material together which decreases a possibility of leakage at the respective connection lines. According to the prior art method, some of the connection lines may comprise a transition between two sealed layers and three sealed layers. At such transition point, leakage easily occurs. Preferably, the method steps are carried out in the order as above listed. Due to the successive manufacturing steps of the method of the present invention, interruption of the manufacturing process is minimized, which may be cost and time efficient and prevents alignment problems.

In further elaboration of the invention, the method may further comprise inserting the sliced food product in the package inner space before interconnecting the opposing film material layers at the longitudinal connection line.

After finishing the mentioned manufacturing steps, the individual packages may be separated from the remainder of the web of film material. Separation may take place adjacent the transversal connection lines, for instance by cutting the opposing film material layers. Instead of cutting both layers to separate the packages, the packages may be separated at the same time as providing the connection lines. The connection lines may be formed by sealing the respective film material layers onto each other such that sealing seams are formed.

To provide the re-closable package with re-closable properties, the re-closable strip has, a substantially longitudinal adhesive layer covered with a backing layer at a side facing away from the film material layer to which the adhesive layer is attached.

In further elaboration of the invention, the re-closable strip may be provided on an outer surface of the first film material layer, wherein the second film material layer, at least a part of the inner surface of the second film material layer extending between the longitudinal connection line and the longitudinal edge of said layer, which part is not overlapped by the part of the first film material layer extending between the longitudinal connection line and the longitudinal edge of said layer, is folded against the re-closable strip.

In an alternative embodiment of the invention, the re-closable strip may be provided on an inner surface of the second film material layer, on the part thereof extending between the first and second longitudinal edges of the film material layers, thus on at least a part of the inner surface of the second film material layer extending between the longitudinal connection line and the longitudinal edge of said layer, which part is not overlapped by the part of the first film material layer extending between the longitudinal connection line and the longitudinal edge of said layer.

During sealing of the transversal connection lines, which sealing encompasses applying heat and pressure to the respective foil layers, the adhesive layer between the film material layer and the backing layer may soften due to the applied heat. Due to the pressure applied, little adhesive material may exit from between the film material layer and the backing layer, thereby providing adhesive properties to the re-closable strip when it still comprises the backing layer. According to a further aspect of the invention, the film material layer that abuts the re-closable strip after folding the film material layers along the second folding line is removably connected to the adhesive material from the adhesive layer that exits from between the backing layer and the film material layer to which the adhesive layer is attached. Due to such limited connection area, formed by the escaped adhesive material, the film material may be easily removed from the adhesive material of the re-closable strip still covered with the backing layer, such that easy access is provided to the longitudinal connection line to open said connection line to be able to reach the sliced food product inside the package. To re-close the package again, only the backing layer has to be removed from the adhesive layer and part of the first and second layers has to be folded along the second folding line again to be able to attach the respective layer to the adhesive layer. Preferably, the adhesive layer is configured to enable multiple opening operations and multiple closing operations of the package without losing the necessary adhesive power thereof.

In further elaboration of the invention, the film material may comprise a plastic foil. Usually, such foil is substantially transparent such that the contents of the package may be visible without opening the package. In a preferred embodiment of the invention, the first surface of the foil is more heat resistant than a second surface thereof such that a first surface of the foil will not melt together with another part of said first surface and/or will be pealable sealed to the second surface during heat sealing of the connection lines. Thus, such kind of foil contributes to the minimized risk of leakage of the package at the connection lines because only two layers of foil, thus of the surface that is less heat resistant, will melt together. Furthermore, when using such foil, the outer surface of the first film material layer and the inner surface of the second film material layer that are folded against each other, to provide the removable connection before initially opening the package, may be removably interconnected by means of the escaped adhesive material as explained before and/or by means of the pealable sealing obtained during heat sealing of the transversal connection lines. Due to the larger heat resistance of the first surface of the foil, the foil will not melt to the sealing station of the apparatus during heat sealing of the connection lines.

The invention also relates to a re-closable package preferably manufactured with the above described manufacturing method, according to the features of claim 9.

The aforementioned and other features and advantages of the invention will be more fully understood from the following detailed description of certain embodiments of the invention, taken together with the accompanying drawings, which are meant to illustrate and not to limit the invention.

### Brief description of the drawings

Fig. 1 schematically shows a front view of an embodiment of the re-closable package according to the invention;
Figs. 2-5 schematically show cross sectional view of the re-closable package according to the invention during different manufacturing steps thereof.

It is to be noted that like parts in the different figures are provided with like reference numerals.

### Detailed description

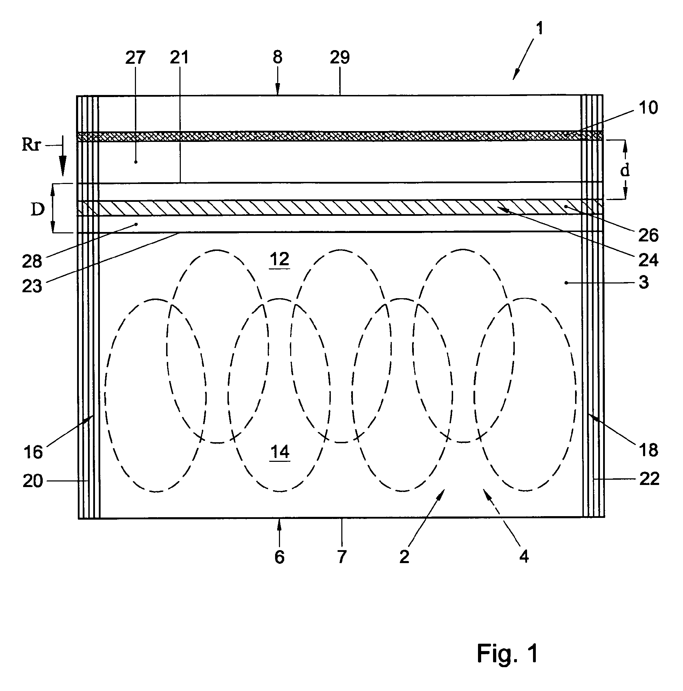

In Figure 1 an embodiment of a re-closable package 1 manufactured with the manufacturing method according to the invention is shown. The re-closable package 1 comprises a first package layer 2 and a second package layer 4 which are interconnected at a first substantially longitudinal edge 6 via a first folding line 7. The package layers 2, 4 are from a film material such as a plastic foil, which preferably is transparent. Since the package 1 is used for packaging food, the foil needs to meet relatively strict requirements. The foil must not be toxic, give off, or otherwise react with the packaged goods.

Adjacent a second substantially longitudinal edge 8, the first package layer 2 is connected to the second package layer 4 by means of a connection line 10. The connection line 10 is formed by a sealing seam. In between the first and second package layers 2, 4, a package inner space 12 is provided. In said inner space 12, sliced food products 14, such as sliced cheese or sliced sausage, are contained. The first and second package layers 2, 4 are sealed together at the transversal edges 16, 18 at transversal connection lines 20, 22. Said connection lines 20, 22 are formed by sealing seams. Said edges 16, 18 extend substantially perpendicular from the longitudinal edges 6, 8.

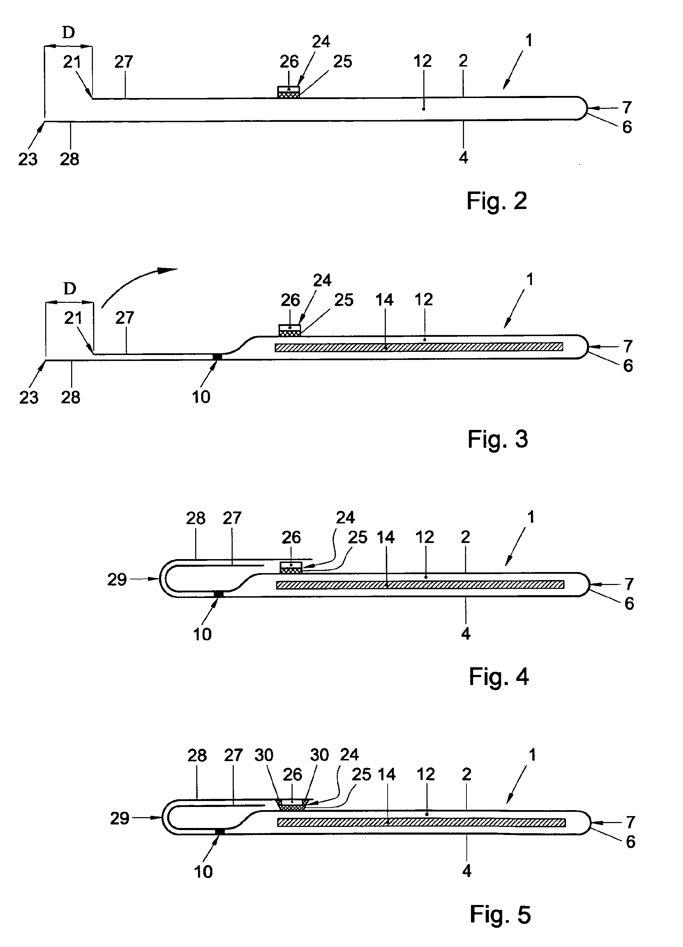

On the outer surface 3 of the first package layer 2, a re-closable strip 24 is provided. The re-closable strip 24 extends substantially parallel to the longitudinal connection line 10 at a short distance d from said connection line 10 seen in a direction Rr extending from the connection line 10 towards the first folding line 7. The re-closable strip 24 comprises an adhesive layer 25 (see Figures 2-5) attached to the outer surface 3 of the first package layer 2. The adhesive layer 25 comprises an elongated filament of adhesive material. On top of said adhesive layer 25, a backing layer 26 is provided. The backing layer 26 can be removed easily from said adhesive layer 25 after the sealing seam of the longitudinal connection line 10 has been broken to be able to remove at least part of the sliced food products 14 from the inner space 12 of the package 1. After removal of the backing layer 26, the adhesive layer 25 is freely accessible and can be used to attach the second package layer 4 to the first package layer 2 such that the package 1 can be re-closed. It is noted that the second package layer 4 is lengthened beyond the first longitudinal edge 21 of the first package layer 2. Extending from the longitudinal connection line 10 in a direction away from the package inner space 14, two flaps 27, 28 formed by parts of the first and second package layers 2, 4, are provided. The first flap 27 being part of the first package layer 2 is shorter than the second flap 28 being part of the second package layer 4, at least seen in a direction opposite to direction Rr. Thus, when the package 1 is re-closed, the second flap 28 and the first flap 27 are both folded along a second folding line 29 until the second flap 28 abuts the adhesive layer 25 (see Figure 5). In the initial situation, thus before opening the longitudinal connection line 10, the backing layer 26 is still provided on top of the adhesive layer 25 such that the adhesive layer 25 does not contact the second flap 28. However, since the re-closable strip 24 is configured such that a small amount of adhesive 30 may exit from under the backing layer 26, the second flap 28 may be retained against the backing layer 26 by means of said small amount of adhesive 30 (see Figure 5). Instead or additionally, the second flap 28, more specifically the inner surface of the second flap 28, may be retained against the outer surface 3 of the first package layer 2 by means of a pealable seal (not shown) that is formed during heat sealing of the transversal connection lines 20, 22. After breaking the connection line 10 to be able to remove sliced food products from the package inner space 12, the backing layer 26 may be removed such that the adhesive layer 25 is accessible and the second flap 28 may be removably connected to said adhesive layer 25. Preferably, the adhesive layer 25 comprises an adhesive that enables releasing of the second flap 28 from said layer 25 such that a re-closed package may be re-opened again.

In an alternative embodiment of the package 1 according to the invention, the adhesive layer 25 may instead be provided on the second flap 28, at least an inner surface, i.e. a surface facing the first flap 27, thereof, such that when creating the second folding line 29, the adhesive layer 25 is brought into contact with the upper surface 3 of the first package layer 2 to form a removable connection with the upper surface to enable multiple opening and closing of the package 1.

Referring now to Figures 2-5, the method for manufacturing a re-closable package 1 according to an embodiment of the invention is described. The method is preferably carried out on an apparatus (not shown) for manufacturing the above described re-closable package for containing sliced food products. To efficiently manufacture said packages, it may be expedient that the apparatus according to the invention comprises a folding-inserting-closing station that is positioned downstream of a web supply for supplying the web of suitable material, in this case foil film material to the folding-inserting-closing station. Such a station may be configured for folding both layers 2, 4 along a first folding line 7 such that said layers 2, 4 are provided substantially on top of each other (see Figure 2). In fact, the film material of the web is folded along a longitudinally extending folding line 7, said folding line 7 preferably extending adjacent a longitudinally extending center line of the web of film material such that the respective first and second package layers 2, 4 are of a different length. More in particularly, a first longitudinal edge 21 of the first package layer 2 is positioned at a short distance D of a second longitudinal edge 23 of the second package layer 4 (see Figures 2-3). In said station, the re-closable strip 24 is applied to the outer surface 3 of the first package layer 2 or to an inner surface of the second package layer 4, at least to the inner surface of the second flap 28.

Subsequently, the first and second package layers 2, 4 are interconnected by providing a connection line 10 forming sealing seam (see Figure 3). Preferably, before providing the sealing seam the sliced food products 14 are inserted between the respective first and second package layers 2, 4. The connection line 10 preferably extends substantially parallel to the respective longitudinal edges 21, 23 and to the folding line 7. After insertion of the products 14, both flaps 27, 28 are similarly folded along a second folding line 29 to at least bring the second flap 28 towards the re-closable strip 24 to be connected thereto by means of the exiting adhesive 30 (see Figures 4-5). Subsequently, the inner space 12 is also closed at opposing transversal connection lines 20, 22 (see Figure 1) preferably by sealing the two package layers 2, 4 to each other. Preferably, a first surface 3 of the foil material is more heat resistant than a second surface of the foil such that contact of the first surface with another part of the first surface will not result in melting together, even during forming the transversal connection lines 20, 22. However, the second surface may be pealable sealed to the first surface during heat sealing of the transversal connection lines 20, 22 such that the second flap 28 may be removably connected to the outer surface 3 of the first package layer 2 by means of the pealable seal formed between the inner surface of the second flap 28 and the outer surface 3 of the first package layer 2. This pealable seal may provide the removable connection instead of or additionally to the removable connection formed by the escaped adhesive material 30. Consequently, the outer surface of the first flap 27 will not melt to the outer surface 3 of the first package layer 2 and thus the flaps 27, 28 may be removed easily from the first package layer 2.

If desired, the products 14 may be vacuum packaged. Alternatively, in the inner space 12 of the package 1, a modified atmosphere can be realized which is beneficial to, for instance, the shelf life and/or the taste of the products 14.

In the foregoing specification, the invention has been described with reference to a specific embodiment of the invention. It will, however, be evident that various modifications and changes may be made therein without departing from the broader spirit and scope of the invention as set forth in the appended claims. First of all, different kinds of film material may be used to manufacture the described re-closable packages. The re-closable strip may be provided on different locations on the package 1. The package 1 may have different dimensions and can receive different kinds of sliced food products.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Method for manufacturing a re-closable package (1) for sliced food products, such a sliced meat or sliced cheese, the method comprising the steps of:
• folding a web of film material along a substantially longitudinal first folding line (7) resulting in two opposing film material layers (2, 4), wherein a first longitudinal edge (21) of a first layer (2) is positioned at a short distance (D) of a second longitudinal edge (23) of a second layer (4);
• providing a re-closable strip (24) on one of the first and second layers (2, 4) extending substantially parallel to the longitudinal edges (21, 23), wherein the re-closable strip (24) comprises a substantially longitudinal adhesive layer (25) covered with a backing layer (26) at a side facing away from the film material layer to which the adhesive layer (25) is attached;
• interconnecting the opposing film material layers adjacent the longitudinal edges (21, 23) to create a package inner space (12) between the first folding line (7) and a substantially longitudinal connection line (10);
• folding both film material layers (2, 4) along a substantially longitudinal second folding line (29), said second folding line provided adjacent and substantially parallel to the connection line (10) such that one of the film material layers abuts the re-closable strip, wherein the film material layer (2, 4) that abuts the re-closable strip (24) after folding the film material layers along the second folding line (29) is removably connected to adhesive material (30) from the adhesive layer (25) that exits from between the backing layer (26) and the film material layer (2, 4) to which the adhesive layer is attached;
• closing the inner space (12) at transversal connection lines (20, 22) that extend substantially perpendicular to the first and second folding lines (7, 29).

2. Method according to claim 1, wherein the method further comprises inserting the sliced food product in the package inner space (12) before interconnecting the opposing film material layers at the longitudinal connection line (10).

3. Method according to claim 1 or 2, wherein the method further comprises separating individual packages from the web of film material adjacent the transversal connection lines (20, 22), for instance by cutting the opposing film material layers.

4. Method according to any one of the preceding claims, wherein the connection lines (10, 20, 22) are formed by sealing the respective layers onto each other thereby forming sealing seams.

5. Method according to any one of the preceding claims, wherein the re-closable strip (24) is provided on an outer surface (3) of the first film material layer (2), wherein the second film material layer (4) is folded against the re-closable strip (24).

6. Method according to any one of claims 1-4, wherein the re-closable strip (24) is provided on an inner surface of the second film material layer (4), on the part thereof extending between the first and second longitudinal edges (21, 23) of the respective film material layers (2, 4).

7. Method according to any one of the preceding claims, wherein the film material comprises a plastic foil.

8. Method according to claim 7 wherein a first surface of the foil is more heat resistant than a second surface of the foil such that a first surface of the foil will not melt together with another part of said first surface and/or will be pealable sealed to the second surface during heat sealing of the connection lines.

9. Re-closable package preferably manufactured with a method according to any one of claims 1-8, wherein the package comprises first and second package layers (2, 4) of film material, said layers closed along first and second longitudinal edges by means of first folding line (7) and one of a second folding line (29) and a longitudinal connection line (10), said layers closed along first and second transversal edges by means of transversal connection lines, wherein an outer surface of the first package layer or an inner surface of the second package layer is provided with a re-closable strip (24), wherein an inner surface of the second package layer or an outer surface of the first package layer, respectively, is removably connected to the re-closable strip due to adhesive material (30) exiting from under a backing layer covering the adhesive layer of the re-closable strip.

10. Re-closable package according to claim 9, wherein the film material comprises a plastic foil, a first surface of the foil is more heat resistant than a second surface of the foil such that a first surface of the foil will not melt together with another part of said first surface and/or will be pealable sealed to the second surface during heat sealing of the transversal connection lines.

## Patentansprüche

1. Verfahren zur Herstellung einer wiederverschließbaren Verpackung (1) für in Scheiben geschnittene Lebensmittelprodukte, wie beispielsweise in Scheiben geschnittenes Fleisch oder in Scheiben geschnittener Käse, welches Verfahren folgende Schritte umfasst:
- Falten einer Folienmaterialbahn entlang einer im Wesentlichen länglichen ersten Faltlinie (7), was in zwei gegenüberliegenden Folienmaterialschichten (2, 4) resultiert, wobei eine erste Längskante (21) einer ersten Schicht (2) in einem kurzen Abstand (D) von einer zweiten Längskante (23) einer zweiten Schicht (4) positioniert ist;
- Bereitstellen eines wiederverschließbaren Streifens (24) auf einer der ersten und zweiten Schichten (2, 4), die im Wesentlichen parallel zu den Längskanten (21, 23) verläuft, wobei der wiederverschließbare Streifen (24) eine im Wesentlichen haftfähige Längsschicht (25) umfasst, bedeckt mit einer Trägerschicht (26) auf einer Seite, die von der Folienmaterialschicht, auf der die Trägerschicht (25) befestigt ist, weg gerichtet ist;
- Verbinden der gegenüberliegenden Folienmaterialschichten neben den Längskanten (21, 23) zum Schaffen eines Verpackungsinnenraums (12) zwischen der ersten Faltlinie (7) und einer im Wesentlichen länglichen Verbindungslinie (10);
- Falten beider Folienmaterialschichten (2, 4) entlang einer im Wesentlichen länglichen zweiten Faltlinie (29), bereitgestellt neben und im Wesentlichen parallel zu der Verbindungslinie (10), sodass eine der Folienmaterialschichten an den wiederverschließbaren Streifen stößt, wobei die Folienmaterialschicht (2, 4), die an den wiederverschließbaren Streifen (24) stößt, nach dem Falten der Folienmaterialschichten entlang der zweiten Faltlinie (29) entfernbar verbunden ist mit dem haftenden Material (30) der Haftschicht (25), das zwischen der Trägerschicht (26) und der Folienmaterialschicht (2, 4), auf der die Haftschicht befestigt ist, austritt;
- Verschließen des Innenraums (12) an schräg verlaufenden Verbindungslinien (20, 22), die im Wesentlichen lotrecht zu den ersten und zweiten Faltlinien (7, 29) verlaufen.

2. Verfahren nach Anspruch 1, wobei das Verfahren ferner das Einführen des in Scheiben geschnittenen Lebensmittelprodukts in den Verpackungsinnenraum (12) umfasst, bevor die gegenüberliegenden Folienmaterialschichten an den Längsverbindungslinien (10) miteinander verbunden werden.

3. Verfahren nach Anspruch 1 oder 2, wobei das Verfahren ferner das Trennen einzelner Verpackungen von der Folienmaterialbahn neben den schräg verlaufenden Verbindungslinien (20, 22), beispielsweise durch Schneiden der gegenüberliegenden Folienmaterialschichten, umfasst.

4. Verfahren nach einem der vorhergehenden Ansprüche, wobei die Verbindungslinien (10, 20, 22) durch Versiegeln der jeweiligen Schichten aufeinander gebildet werden, sodass Versiegelungsnähte entstehen.

5. Verfahren nach einem der vorhergehenden Ansprüche, wobei der wiederverschließbare Streifen (24) auf einer Außenfläche (3) der ersten Folienmaterialschicht (2) bereitgestellt ist, wobei die zweite Folienmaterialschicht (4) gegen den wiederverschließbaren Streifen (24) gefaltet ist.

6. Verfahren nach einem der Ansprüche 1-4, wobei der wiederverschließbare Streifen (24) auf einer Innenfläche der zweiten Folienmaterialschicht (4), auf einem Teil von dieser, der zwischen den ersten und zweiten Längskanten (21, 23) der jeweiligen Folienmaterialschichten (2, 4) verläuft, bereitgestellt ist.

7. Verfahren nach einem der vorhergehenden Ansprüche, wobei das Folienmaterial eine Plastikfolie umfasst.

8. Verfahren nach Anspruch 7, wobei eine erste Oberfläche der Folie wärmebeständiger ist als eine zweite Oberfläche der Folie, sodass eine erste Oberfläche der Folie nicht mit einem anderen Teil der ersten Oberfläche verschmilzt und/oder während des Heißversiegelns der Verbindungslinien abziehbar mit der zweiten Oberfläche versiegelt wird.

9. Wiederverschließbare Verpackung, vorzugsweise hergestellt in einem Verfahren nach einem der Ansprüche 1-8, wobei die Verpackung erste und zweite Verpackungsschichten (2, 4) aus Folienmaterial umfasst, die Schichten entlang erster und zweiter Längskanten durch eine erste Faltlinie (7) und eine zweite Faltlinie (29) und/oder eine Längsverbindungslinie (10) verschlossen sind, die Schichten entlang erster und zweiter schräg verlaufender Kanten durch schräg verlaufende Verbindungslinien verschlossen sind, wobei eine Außenfläche der ersten Verpackungsschicht oder eine Innenfläche der zweiten Verpackungsschicht mit einem wiederverschließbaren Streifen (24) versehen ist, wobei eine Innenfläche der zweiten Verpackungsschicht bzw. eine Außenfläche der ersten Verpackungsschicht mit dem wiederverschließbaren Streifen durch Haftmaterial (30), das unter einer Trägerschicht austritt, welche die Haftschicht des wiederverschließbaren Streifens bedeckt, entfernbar verbunden ist.

10. Wiederverschließbare Verpackung nach Anspruch 9, wobei das Folienmaterial eine Plastikfolie umfasst, eine erste Oberfläche der Folie wärmebeständiger als eine zweite Oberfläche der Folie ist, sodass eine erste Oberfläche der Folie nicht mit einem anderen Teil der ersten Oberfläche verschmilzt und/oder während der Heißversiegelung der schräg verlaufenden Verbindungslinien abziehbar auf der zweiten Oberfläche versiegelt wird.

## Revendications

1. Procédé de fabrication d'un emballage réutilisable (1) destiné à des aliments en tranches, comme de la viande en tranches ou du fromage en tranches, ledit procédé comprenant les étapes qui consistent à :
- plier une bande de film le long d'une première ligne de pliage sensiblement longitudinale (7), afin d'obtenir deux couches de film opposées (2, 4), un premier bord longitudinal (21) d'une première couche (2) étant positionné à une courte distance (D) d'un second bord longitudinal (23) d'une seconde couche (4) ;
- prévoir une bande refermable (24) sur l'une desdites première et seconde couches (2, 4), qui s'étende de manière sensiblement parallèle auxdits bords longitudinaux (21, 23), ladite bande refermable (24) comprenant une couche adhésive sensiblement longitudinale (25) recouverte d'une couche de support (26) au niveau d'un côté opposé à la couche de film à laquelle ladite couche adhésive (25) est reliée ;
- relier les couches de film opposées adjacentes auxdits bords longitudinaux (21, 23) afin de créer un espace intérieur d'emballage (12) entre la première ligne de pliage (7) et une ligne de raccordement sensiblement longitudinale (10) ;
- replier les deux couches de film (2, 4) le long d'une seconde ligne de pliage sensiblement longitudinale (29), ladite seconde ligne de pliage étant adjacente et sensiblement parallèle à ladite ligne de raccordement (10) afin que l'une des couches de film bute contre ladite bande refermable, ladite couche de film (2, 4) qui bute contre ladite bande refermable (24) après le pliage desdites couches de film le long de ladite seconde ligne de pliage (29) étant reliée de manière amovible audit matériau adhésif (30) depuis ladite couche adhésive (25) qui sort d'entre ladite couche de support (26) et ladite couche de film (2, 4) à laquelle ladite couche adhésive est reliée ;
- fermer ledit espace intérieur (12) au niveau de lignes de raccordement transversales (20, 22) qui s'étendent de manière sensiblement perpendiculaire auxdites première et seconde lignes de pliage (7, 29).

2. Procédé selon la revendication 1, qui comprend en outre l'insertion dudit aliment en tranches dans ledit espace intérieur de l'emballage (12) avant de relier lesdites couches de film opposées au niveau de ladite ligne de raccordement longitudinale (10).

3. Procédé selon la revendication 1 ou 2, qui comprend en outre la séparation d'emballages individuels depuis ladite bande de film adjacente auxdites lignes de raccordement transversales (20, 22), comme par exemple découpant lesdites couches de film opposées.

4. Procédé selon l'une quelconque des revendications précédentes, dans lequel lesdites lignes de raccordement (10, 20, 22) sont formées en fermant les couches respectives les unes sur les autres, en formant ainsi des fermetures étanches.

5. Procédé selon l'une quelconque des revendications précédentes, dans lequel ladite bande refermable (24) est prévue sur une surface extérieure (3) de ladite couche de film (2), ladite seconde couche de film (4) étant repliée contre ladite bande refermable (24).

6. Procédé selon l'une quelconque des revendications 1 à 4, dans lequel ladite bande refermable (24) est prévue sur une surface intérieure de ladite seconde couche de film (4), sur la partie de celle-ci qui s'étend entre lesdits premier et second bords longitudinaux (21, 23) des couches de film respectives (2, 4).

7. Procédé selon l'une quelconque des revendications précédentes, dans lequel ledit film comprend une feuille de plastique.

8. Procédé selon la revendication 7, dans lequel une première surface de ladite feuille est plus résistante à la chaleur qu'une seconde surface de ladite feuille, de sorte qu'une première surface de ladite feuille ne se disperse pas avec une autre partie de ladite première surface, et/ou puisse être placée sur ladite seconde surface pendant le thermoscellage desdites lignes de raccordement.

9. Emballage refermable de préférence fabriqué avec un procédé selon l'une quelconque des revendications 1 à 8, ledit emballage comprenant une première et une seconde couches d'emballage (2, 4) en film, lesdites couches étant fermées le long d'un premier et d'un second bords longitudinaux à l'aide d'une première ligne de pliage (7) et de l'une d'une seconde ligne de pliage (29) et d'une ligne de raccordement longitudinale (10), lesdites couches étant fermées le long desdits premier et second bords longitudinaux à l'aide desdites lignes de raccordement transversales, et une surface extérieure de ladite première couche d'emballage ou une surface intérieure de ladite seconde couche d'emballage étant munie d'une bande refermable (24), une surface intérieure de ladite seconde couche d'emballage ou une surface extérieure de ladite première couche d'emballage, respectivement, étant reliée de manière amovible à ladite bande refermable en raison du matériau adhésif (30) qui sort du dessous d'une couche de support qui recouvre ladite couche adhésive de ladite bande refermable.

10. Emballage refermable selon la revendication 9, dans lequel ledit film comprend une feuille de plastique, une première surface de ladite feuille de plastique étant plus résistante à la chaleur qu'une seconde surface de ladite feuille, de sorte qu'une première surface de ladite feuille ne se disperse pas avec une autre partie de ladite première surface, et/ou puisse être placée sur ladite seconde surface pendant le thermoscellage desdites lignes de raccordement transversales.
